Europäisches Patentamt

European Patent Office

Office européen des brevets

(19)

(11) Veröffentlichungsnummer: **0 005 534**
**B1**

(12) **EUROPÄISCHE PATENTSCHRIFT**

(45) Veröffentlichungstag der Patentschrift: **24.02.82**

(21) Anmeldenummer: **79101477.2**

(22) Anmeldetag: **15.05.79**

(51) Int. Cl.³: **G 01 S 13/74,**
**B 61 L 25/04,**
**G 06 K 19/06, G 08 G 1/12**

(54) Einrichtung zur Identifizierung von Gegenständen und Personen.

(30) Priorität: **16.05.78 DE 2821299**

(43) Veröffentlichungstag der Anmeldung:
**28.11.79 Patentblatt 79/24**

(45) Bekanntmachung des Hinweises auf die Patenterteilung:
**24.02.82 Patentblatt 82/8**

(84) Benannte Vertragsstaaten:
**BE CH FR GB IT NL SE**

(73) Patentinhaber: **SIEMENS AKTIENGESELLSCHAFT**
**Berlin und München**
**Postfach 22 02 61**
**D-8000 München 22 (DE)**

(72) Erfinder: **Vogel, Klaus, Dipl.-Ing.**
**Kranzelstrasse 15**
**D-8191 Gelting (DE)**

(56) Entgegenhaltungen:
DE - A - 2 314 841
EP - A - 0 002 595
FR - A - 2 345 729
NL - A - 67 12043
US - A - 3 273 146
US - A - 3 706 094
US - A - 3 785 716
US - A - 3 798 642
US - A - 3 896 484
US - A - 3 981 011
US - A - 4 059 831

(56) Entgegenhaltungen:
IEEE TRANSACTIONS ON MICROWAVE THEORY
AND TECHNIQUES, Vol, MTT-22, Nr. 12,
Dezember 1974, New York, USA,
D. W. MELLON et al.: "Development of a pulse
compression distance measuring equipment
system using surface acoustic wave devices",
Seiten 1308—1312.

NEC RESEARCH AND DEVELOPMENT, Nr. 33,
April 1974, Tokyo.
H. KASHIHARA et al.: "All solid-state DME for
terminal use", Seiten 50—60.

Courier Press, Leamington Spa, England.

Einrichtung zur Identifizierung von Gegenständen und Personen

Die Erfindung bezieht sich auf eine Einrichtung zur Identifizierung von Gegenständen und Personen, bestehend aus einem am zu identifizierenden Objekt angebrachten Informationsträger (Kennungsordnung) und einer mit diesem (dieser) über elektromagnetische Wellen in Verbindung befindlichen Leseeinheit, bei der die Kennungsordnung aus einer Vielzahl zumindest eingangsseitig parallelgeschalteter, Verzögerungselemente von verschiedener, definierter Verzögerungszeit enthaltender passiver Elemente besteht, die über Anpassungsvierpole und Verbindungsleitungen mit einer Sende-/Empfangsantenne bzw. einer getrennten Sende- und Empfangsantenne verbunden sind.

Derartige Einrichtungen haben ein breites Anwendungsgebiet und werden bisher vor allem im Schienenverkehr für die Erkennung von Güterwagen, Containern und dergl. sowie im Straßenverkehr zur Identifizierung von Kraftfahrzeugen verwendet.

Eine Einrichtung der eingangs beschriebenen Art ist im wesentlichen durch die DE—AS 1 234 592 bekannt. Dabei ist ein Sender vorgesehen, de an Gegenstände, die mit jeweils unterschiedlichen Kombinationen abgestimmter Kreise versehen sind, in zeitlicher Folge Schwingungen von zeitlich veränderlicher Frequenz abgibt. Diese einzelnen abgestimmten Kreise, die piezoelektrische Elemente sind, haben bestimmte, unterschiedliche Durchlaßbereiche, so daß sie nur auf solche Frequenzkombinationen ansprechen, die in ihrem Durchlaßbereich liegen. Wenn diese abgestimmten Kreise ansprechen, lösen sie näceinander die Aussendung von Signalen unterschiedlicher Frequenz aus, aus denen sich für jeden zu erkennenden Gegenstand eine andere Signalkombination ergibt, die zur Erkennung des Gegenstandes in einem zeitlich synchron mit dem Sender arbeitenden Empfänger nachgewiesen und dekodiert wird.

Durch die DE—OS 2 314 841 ist eine passive Schaltungsanordnung zur Rückstrahlung von Radarimpulsen bekannt, die zur Identifizierung eines mit der Schaltungsanordnung versehenen. Objektes Verzögerungsglieder sowie eine Antenne enthält. Dabei ist vorgesehen, daß die Antenne, and der die Radarimpulse mit einer Impulsdauer $\tau_p$ anliegen, mit einem Eingangsverzögerungsglied mit einer Verzögerungszeit $\tau_o$ verbunden ist, dem ein Leistungsteiler mit mehreren Ausgängen nachgeschaltet ist. Der erste Ausgang ist mit einer am Ende kurzgeschlossenen Leitung abgeschlossen, an den anderen Ausgängen liegt jeweils eine Serienschaltung aus einem Verzögerungsglied und einer kurzgeschlossenen Leitung mit variabler Länge an. Die Verzögerungszeiten der Verzögerungsglieder sind gleich oder verschieden.

Ferner ist durch die US—PS 3 798 642 ein Erkennungssystem bekannt, das einen Sender enthält, der ein amplituden/moduliertes Signal zu einem Meßobjekt ausstrahlt, das eine Harmonische des empfangenen Signals erzeugt, das amplituden/modulierte Signal detektiert und das harmonische Signal mit dem detektierten Signal moduliert. Das Meßobjekt enthält ein frequenzselektives Netzwerk, in dem die vom Meßobjekt zurückgesendeten Signalkomponenten codiert werden. Dieses Netzwerk enthält mehrere abgestimmte Kreise, die jeweils mittels eines Schalters kurzgeschlossen werden können.

Der Erfindung liegt die Aufgabe zugrunde, für eine solche Einrichtung eine Kennungsanordnung zu schaffen, die bei räumlich kleinem und stabilem Aufbau einen hohen Informationsgehalt ermöglicht.

Diese Aufgabe wird gemäß der Erfindung dadurch gelöst, daß den Verzögerungselementen einstellbar ausgebildete Dämpfungselemente mit definierter Dämpfung und Durchlaßoder Sperrfilter in Reihe geschaltet sind und daß durch entsprechende Ausbildung der Leiterbahnen einzelne Verzögerungszweige abtrennbar sind und daß Verzögerungsleitungen, gegebenenfalls diesen in Reihe geschaltete Wandler, Dämpfungselemente, Filter und Anpassungsvierpole auf der einen Seite und die Antennen auf der gegenüberliegenden Seite eines gemeinsamen Trägersubstrats aufgebracht und die Elemente der Vorder- und Rückseite des Trägersubstrats über Durchkontaktierungen miteinander verbunden sind.

Vorteilhafte Ausgestaltungen und Weiterbildungen des Erfindungsgegenstandes sind in den Unteransprüchen angegeben.

Anhand von in der Zeichnung dargestellten Ausführungsbeispielen wird die Erfindung nachstehend näher erläutert.

Es zeigen

Fig. 1 eine Kennungsordnung nach der Erfindung im Schaltungsaufbau, bei der die Verzögerungszweige eingangsseitig parallelgeschaltet sind,

Fig. 2 eine Kennungsanordnung nach der Erfindung im Schaltungsaufbau, bei der die Verzögerungszweige ein- und ausgangsseitig getrennt parallelgeschaltet sind,

Fig. 3 ein Ausführungsbeispiel einer Kennungsanordnung,

Fig. 4 eine weitere erfindungsgemäße Kennungsanordnung im Blockschaltbild,

Fig. 5 bis 8 verschiedene Anschaltungen der Kennungsanordnung an die Sende-/Empfangsantenne,

Fig. 9 eine weitere erfindungsgemäße Kennungsanordnung mit Zusatzeinrichtungen im Blockschaltbild und

Fig. 10 ein Ausführungsbeispiel der Erfindung mit einer besonderen Anordnung der Verzögerungsleitungen.

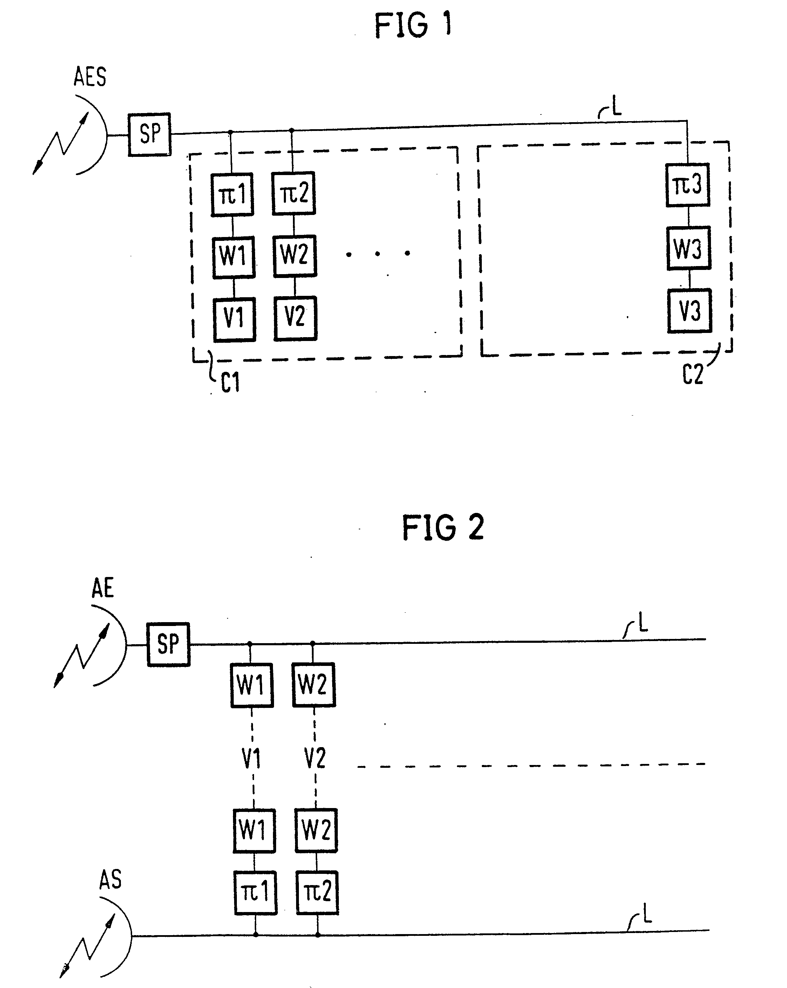

Eine Kennungsanordnung nach dem Grundprinzip der Erfindung ist in dem Blockschaltbild gemäß Fig. 1 dargestellt. Von einem Lesegerät werden dabei elektromagnetische Wellen über eine Empfangseinrichtung A—ES (Antenne; Sammeloptik usw.) empfangen und über einen Anpassungsvierpol SP so an die Parallelschaltung vieler Verzögerungsweige, bestehend aus Dämpfungselementen $\pi 1$, $\pi 2$, $\pi n$, Wandlern W1, W2, Wn und Verzögerungsleitungen V1, V2, Vn weitergeleitet und transformiert, daß ein möglichst hoher Anteil der Leseenergie in die einzelnen Verzögerungsweige eindringt und mit der Kennungsinformation versehen wird. Über die wahlweise vorhandenen und zur Kennung definiert justierbaren Dämpfungselemente $\pi$ und, sofern notwendig, elektrische Wandler W — die zur Kennung filterartig eine definierte Frequenzbandbreite und Arbeitsfrequenz besitzen können — gelangt die Leseenergie zu den Vorzögerungselementen V, die als Kennungsinformation verschiedene Verzögerungszeiten $\tau$ besitzen.

Die Verzögerungselemente V können verschiedener Natur sein, etwa Oberflächen- und Bulk-Wellenverzögerungsleitungen auf Quarz- bzw. Lithiumtitanatsubstraten, Lichtleitfasern verschiedener Länge (auf Wandler W kann dabei z.B. verzichtet werden), Leitungen aus verteilten und konzentrierten Elementen, Elemente auf Keramik-, Metall- und magnetischer Basis (Bubble-Technik) oder auch auf CCD-Basis (Charge coupled devices) oder andere. Es muß jedoch möglich sein, ihre Verzögerungseigenschaften — wenn nötig über Wandler W — im elektromagnetischen Bereich auszunutzen, wobei die Arbeitsfrequenz im Bereich tiefer bis zu sehr hohen Frequenzen (z.B. Lichtfrequenzen) liegen kann.

Am Ausgang der Verzögerungselemente V wird die Leseenergie mit möglichst hohem Reflexionsfaktor (Kurzschluß oder Leerlauf) reflektiert und gelangt nach nochmaligem Durchlaufen des Verzögerungselementes (Verzögerungszeit $2\tau$) de Wandlers W und Dämpfungselementes $\pi$ über die Antenne A—ES und das Funkfeld zurück zum Lesegerät. Das Leseverfahren kann so gewählt werden, daß sämtliche in der Kennungsanordnung enthaltenen Informationen, nämlich

    Laufzeiten der einzelnen Verzögerungszweige Arbeitsfrequenz der Wandler und Verzögerungselemente
    Bandbreite der Wandler und Verzögerungselemente Durchgangsdämpfung der einzelnen Verzögerungzweige
    Phasenantworten der Anordnung auf einen langen ($\gg \tau_{max}$) quarzgenauen, einfrequenten Leseimpuls

gelesen und ausgewertet werden können.
Die strichliert umrandeten Felder stellen dabei einzelne, ein oder mehrere Verzögerungszweige enthaltende Chips C1, C2 dar, die zur Codierung in gewünschter Weise zusammengefügt werden.

Fig. 2 zeigt eine Abwandlung der Kennungsanordnung nach Fig. 1. Die Leseenergie wird hierbei nicht am Ende der Verzögerungselemente V reflektiert, sondern gelangt über einen zusätzlichen Wandler W zu einem zweiten Parallelschaltungspunkt, an welchem die Ausgänge sämtlicher Verzögerungszweige über eine Leitung L gesammelt sind, und von dort über eine weitere Antenne AS (Optik) zurück zum Lesegerät.

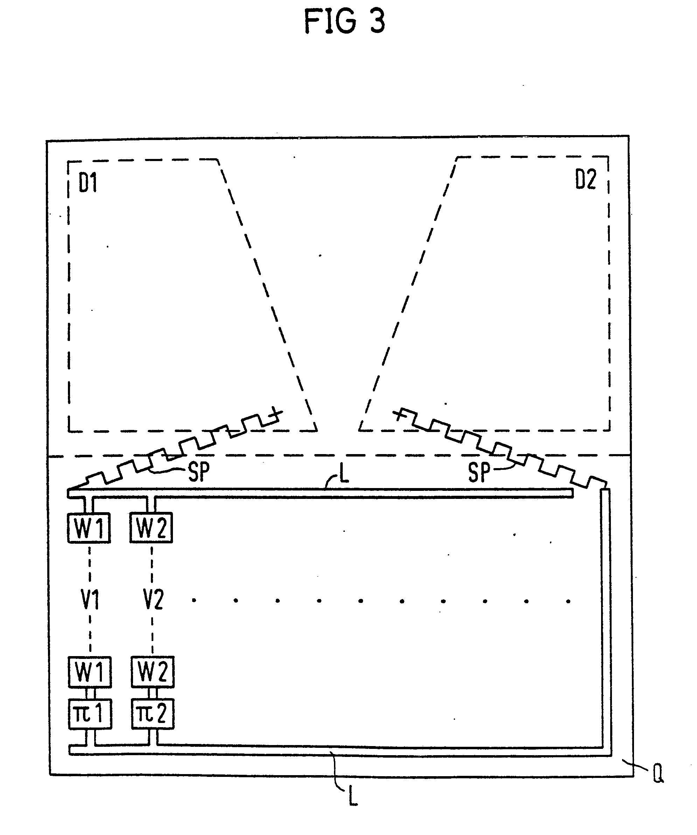

Ein Ausführungsbeispiel der Erfindung ist in Fig. 3 dargestellt. Die Kennungsanordnung einschließlich der Sende-/Empfangsantenne ist auf einem Träger, beispielsweise einer Quarz- oder Lithiumtitanatscheibe Q, aufgebracht. Auf der Vorderseite befinden sich in paralleler Anordnung ein Reihe von Verzögerungsleitungen V1, V2 ... mit beidseitig angeordneten elektromechanischen Wandlern W, W2 ... und in Reihe geschalteten Dämpfungselementen $\pi 1$, $\pi 2$ ... Die Ein- und Ausgänge der Wandler W1, W2 ... sind über Leitungen L parallel verbunden und über z.B. geätzte Anpassungsspulen SP und zur Rückseite der Scheibe Q durchkontaktierte Löcher X mit den auf der Rückseite angeordneten, die Sende-/Empfangsantenne bildenden Dipolen D1, D2 elektrisch verbunden.

Die Scheibe Q kann stoß- und schockfest in ein hermetisch dichtes, stabiles Gehäuse eingebaut werden. Die Antenne läßt sich beispielsweise auch in der Weise aufbauen, daß das Antennenelement das Trägersubstrat für das in handelsüblichen, dichten Gehäusen befindliche Informationsspeicherelement (W; V; $\pi$) bildet und beide gemeinsam in Kunststoff vergossen werden. Das Informationsspeicherelement (Informationsträger) ist dadurch vor Umwelteinflüssen geschützt.

Bei allen Abfragen der Kennungsanordnung entsteht in der Leseeinheit in zeitlich definierter Abfolge und je nachdem, ob entsprechende Laufzeitleitungen der Länge $\tau_x$, der Frequenz fy und der Amplitude $A_z$ vorhanden sind oder nicht, eine Impulsfolge verschieden hoher und langer Impulse, mit verschiedenen Impulsabständen, mit dem Informationsinhalt der Kennungsanordnung. Auf einer Quarzfläche von 40 x 40 mm lassen sich etwa 40 verschiedene Laufzeitleitungen mit maximal 3 $\mu$sec Verzögerung pro Leitung einschließlich Wandlern und Dämpfungselementen aufbringen, so daß sich innerhalb dieser ein sehr großer Informationsinhalt speichernläßt.

Die Codierung der Kennungseinheiten für ein System mit beispielsweise 20 Frequenzen, 20 möglichen Laufzeitlängen und 2 Amplitudenstufen läßt sich in der Weise durchführen, daß für jede der 20 möglichen Frequenzen ein Layout mit 20 Leitungen verschiedener Länge für die Massenfertigung von Quarzplättchen hergestellt wird (vgl. Fig. 1). Die Laufzeitcodierung der einzelnen Chips erfolgt durch Unterbrechung der elektrischen Wanderanschlüsse an die gemeinsame Verbindungsleitung L, beispielsweise mit Hilfe eines Laserstrahls. Auf dieselbe Weise lassen sich Dämpfungselemente zuschalten, indem Leitungsüberbrückungen durchtrennt werden. "Quarzchips" mit den zur Frequenzcodierung der Kennungsanordnungen ausgewählten Frequenzen werden dann in ein hermetisch dichtes Gehäuse eingesetzt, z.B. eingeklebt und angeschlossen.

Bei einer entsprechenden Dimensionierung und Gestaltung der Kennungsanordnung, die est gestattet, die Strukturen der Verzögerungselemente, Wandler und Dämpfungselemente mit Hilfe der Elektronenstrahlbelichtung herzustellen (Elektronenstrahllithographie), ist es möglich, sehr raumsparende, wegen der hohen Auflösung hochfrequente (2—3 GHz) Kennungsanordnungen mit äußerst hohem Informationsinhalt auf z.B. Quarz- und Lithiumtitanatsubstraten herzustellen. Jede einzelne Kennungsanordnung könnte dann durch eine individuelle, rechnergesteuerte Einzelelektronenstrahlbelichtung aus rechnergespeicherten Einzelmasken ($\pi$; $\tau$; f) zusammengestellt (codiert) und hergestellt werden.

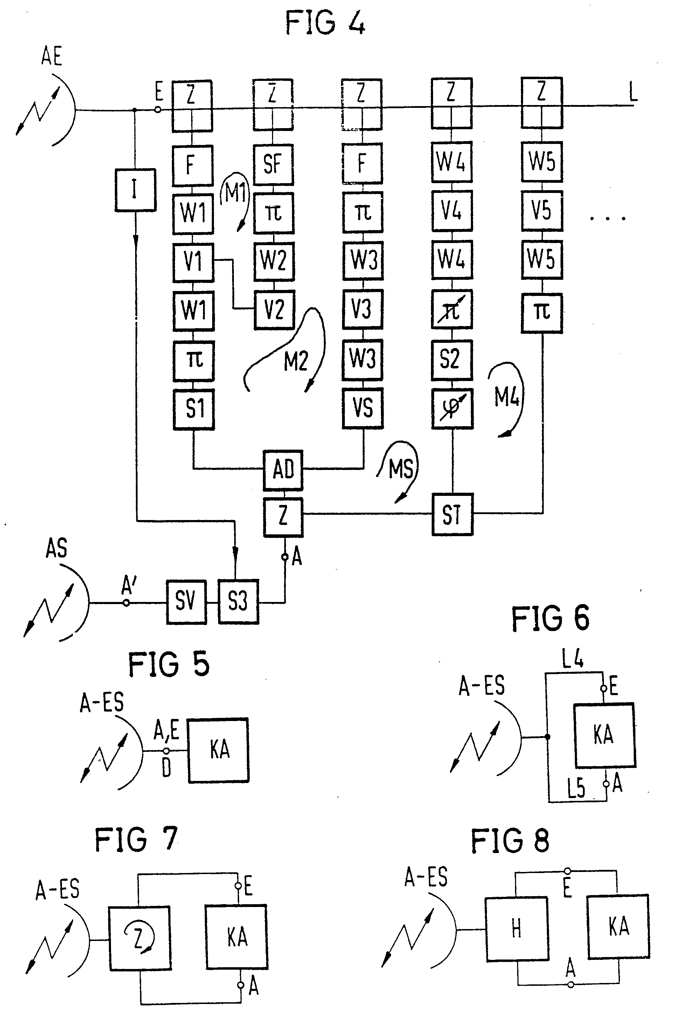

Ein Beispiel einer erweiterten Ausführungsform ist in Fig. 4 dargestellt . Dabei sind dem an sich rein passiven Kennungsnetzwerk auch aktive Senderverstärker nachgeschaltet oder Einzelverstärker eingegliedert, wodurch die Reichweite des Kennungsverfahrens mit der vorgeschlagenen Kennungsanordnung erhöht wird. Die einzelnen Leitungszweige der Kennungsanordnung sind über Verzweigungen Z an die eingangsseitige Verbindungsleitung L angeschaltet. Ein erster Leitungszweig besteht aus einem Filter F, einem Wandler W1, einer Verzögerungsleitung V1, einem Dämpfungselement $\pi$ und einem Schalter S1. Ein zweiter Leitungszweig, bestehend aus einem Sperrfilter SF, einem Dämpfungselement $\pi$, einem Wandler W2 und einer Verzögerungsleitung V2 ist an die Verzögerungsleitung V1 des ersten Leitungszweiges angeschlossen und bildet eine Masche M1. Ein dritter Leitungszweig aus einem Filter F, einem Dämpfungselement $\pi$, einem Wandler W3, einer Verzögerungsleitung V3 und einem Einzelverstärker VS ist über eine Additionsschaltung AD mit dem Ausgang des ersten Leitungszweiges verbunden. Ein vierter Leitungszweig aus einem Wandler W4, einer Verzögerungsleitung V4, einem einstellbaren Dämpfungselement $\pi$, einem Schalter S2 und einem Phasenschieber 4, ist mit einem fünften Leitungszweig aus einem Wandler W5, einer Verzögerungsleitung V5 und einem Dämpfungselement $\pi$ über eine Subtraktionsschaltung ST verbunden. Die verschiedenen Leitungszweige bilden miteinander die Maschen M2, M3 und M4. Der Ausgang der Additionsschaltung AD und der Subtraktionsschaltung ST sind an eine Verzweigung Z geführt, deren dritter Arm den Ausgang A der Kennungsanordnung bildet. An diesen ist ein Schalter S3 angeschaltet, der über eine Identifizierungseinheit I zugleich mit dem Eingang E der Kennungsanordnung verbunden ist, und nachfolgend ein Sendeverstärker SV, der an die Sendeantenne AS angeschaltet ist. Über die Identifizierungseinheit I kann ein vom Sender kommender Code erkannt und damit entschieden werden, ob die Antwort der Kennungsanordnung über den Schalter S3 an die Antenne AS weitergegeben wird oder nicht. Aus einer Vielzahl von Einheiten antwortet dann nur die aufgerufene Einheit. Mit den Schaltern S1 und S2 ist es möglich, eine aktive Programmierung der Kennungsanordnung vorzunehmen.

Mit einer derartigen komplexeren Schaltung ist die Ausnutzung von Verzögerungselementen auch zur Bildung komplizierter, schwer entschlüssel- und nachbildbarer Kennungsfunktionen möglich, nämlich Frequenz-, Laufzeit-, Amplituden-, Bandbreiten- und Phasenkennung. Kennzeichen solcher Schaltung ist ferner die durch die Verzögerung automatische Bildung von Zwischenfrequenzen im Lesegerät bei definiert und programmiert sich ändernder Sendefrequenz und Sendeleistung.

Der Eingang E und Ausgang A der Kennungslanordnung KA kann mit einer oder auch mit zwei Antennen (z.B. kreuzpolarisierte Dipole), wie in den Figuren dargestellt, verbunden werden. Bei Verwendung einer einzigen Antenne A—ES kann die Verbindung als direkte Parallelschaltung (Fig. 5), als Zusammenschaltung über Leitungen L4, L5 (Fig. 6), über Zirkulatoren Z (Fig. 7) oder Hybride H (Fig. 8) erfolgen. Die einzelnen Elemente der Kennungsanordnung und die Antennen können dabei auf dem gleichen Substrat (vgl. Fig. 3) oder auch auf getrennten Substraten aufgebracht werden.

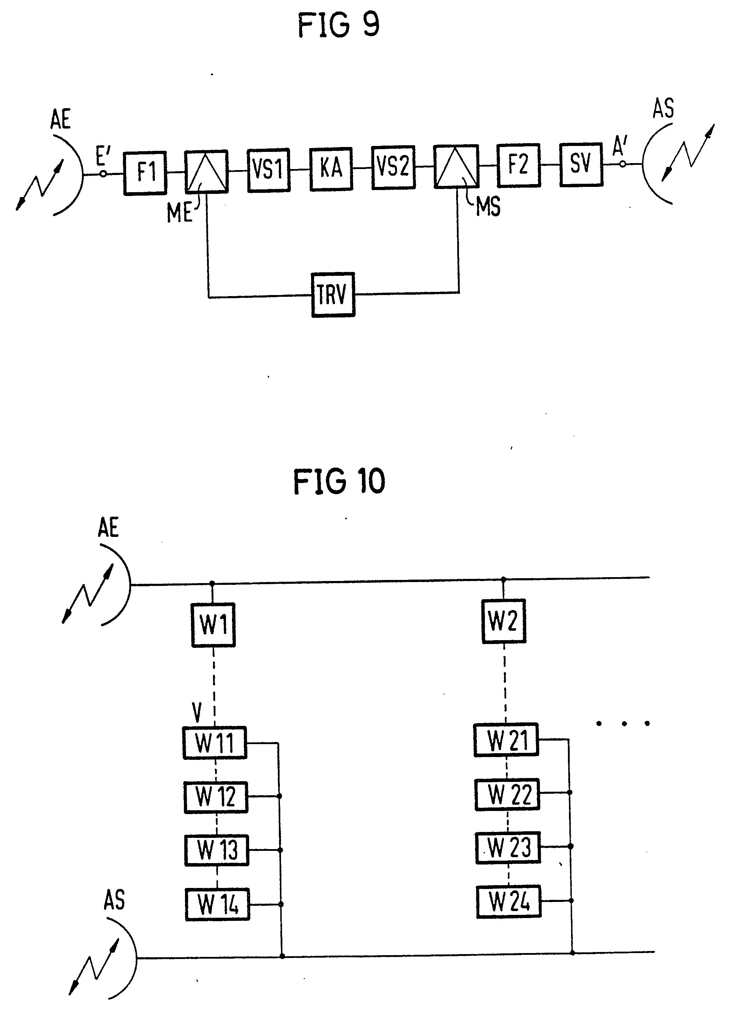

Fig. 9 zeigt eine Schaltung, mit der die vorstehend beschriebene Kennungsanordnung auch in solchen Frequenzbereichen einsetzbar ist, bei denen komplizierte Verzögerungsnetzwerke nur schwer oder gar nicht realisierbar sind. Dabei sind zwischen die mit dem Eingang E' der Schaltung verbundene Empfangsantenne AE und den Eingang der Kennungsanordnung KA ein Filter F1, ein Empfangsmischer ME und ein Verstärker VS1 und zwischen den Ausgang der Kennungsanordnung und Sendeantenne AS eine Verstärker VS2, ein Sendeumsetzer MS, ein Filter F2 und ein Sendeverstärker SV eingeschaltet. Das ankomme Lesesignal wird über das Empfangsfilter F1 dem Fmpfangsmischer ME zugeführt und in diesem mit der Frequenz einer Trägerversorgung TRV in einen solchen Frequenzbereich umgesetzt, in welchem die komplexe Kennungsanordnung leicht realisierbar ist. Das nach der Kennungsanordnung KA mit der Kennung versehene Signal wird anschließend im Verstärker VS2 verstärkt und in dem Sendeumsetzer MS2, der ebenfalls mit der Trägerversorgung TRV verbunden ist, auf die exakt gleiche Frequenz des ursprünglich empfangenen Signals rückumgesetzt, im Filter F2 gefiltert und im Sendeverstärker SV verstärkt und wieder ausgesendet.

Die Wandler und Verzögerungsleitungen lassen sich nach den bekannten Techniken der HF-Impulskompression und/oder Pulsaufweitung auch so auslegen, daß bei einer Lesung des Informationsinhaltes der Kennungsanordnung mit HF-Impulsen eine Kennungsinformation (Pulslängenkennung) durch diese Techniken entsteht oder daß durch Impulskompression das von der Kennungseinheit zur Leseeinheit zurückgesendete Signal durch diese Technik gewissermaßen passiv verstärkt wird und damit der Störabstand des Lesesytems erhöht wird.

Fig. 10 stellt eine Ausführungsform der Verzögerungselemente dar, die zu besonders raumsparenden Kennungsanordnungen mit besonders hoher Informationsdichte führt. Dabei werden die Verzögerungselemente mit Wandlern gleicher Durchlaßfrequenz in jeweils einer Verzögerungsleitung so zusammengefaßt, daß die Oberflächen- oder Bulkwelle von einem durch die Empfangsantenne AE gespeisten Wandler W1, W2 ... erzeugt wird, auf deren Weg nacheinander so viele elektrisch parallelgeschaltete Wandler W11, W12, W13 bzw. W21, W22, W23...angeordnet sind, wie verschiedene Laufzeiten erforderlich sind. Diese Wandler sind so dimensioniert und angeordnet, daß von allen Wandlern ein möglichst gleich hoher Energieanteil ausgekoppelt wird und nur möglichst wenig der Leseenergie ungenutzt verlorengeht.

Die erfindungsgemäße Kennungsanordnung ist in einfacher Weise auch mit kleinen Abmessungen und geringem Gewicht herstellbar. Sie gewährleistet eine hohe Temperaturunabhängigkeit bei Verwendung von Verzögerungsleitungen auf z.B. Quarzsubstrat sowie eine hohe Klima-, Vibrations- und Schockfestigkeit. Ferner ist ein hohe Lesesicherheit und Fälschungssicherheit gegeben. Von besonderem Vorteil ist ferner die Anwendbarkeit für einen sehr weiten Frequenzbereich.

**Ansprüche**

1. Einrichtung zur Identifizierung von Gegenständen und Personen, bestehend aus einem am zu identifizierenden Objekt angebrachten Informationsträger (Kennungsanordnung) und einer mit diesem (dieser) über elektromagnetische Wellen in Verbindung befindlichen Leseeinheit, bei der die Kennungsanordnung aus einer Vielzahl zumindest eingangsseitig parallelgeschalteter, Verzögerungselemente von verschiedener, definierter Verzögerungszeit enthaltender passiver Elemente besteht, die über Anpassungsvierpole und Verbindungsleitungen mit einer Sende-/Empfangsantenne bzw. einer getrennten Sende- und Empfangsantenne verbunden sind, dadurch gekennzeichnet, daß den Verzögerungselementen (V) einstellbar ausgebildete Dämpfungselemente (π) mit definierter Dämpfung und Durchlaß- oder Sperrfilter (F) in Reihe geschaltet sind und daß durch entsprechende Ausbildung der Leiterbahnen einzelne Verzögerungszweige abtrennbar sind und daß Verzögerungsleitungen (V), gegebenenfalls diesen in Reihe geschaltete Wandler (W), Dämpfungselemente (π), Filter (F) und Anpassungsvierpole (SP) auf der einen Seite und die Antennen (AE, AS) auf der gegenüberliegenden Seite eines gemeinsamen Trägersubstrats (Q) aufgebracht und die Elemente (V, W, π, F, SP, AE AS) der Vorder- und Rückseite des Trägersubstrats (Q) über Durchkontaktierungen (X) miteinander verbunden sind.

2. Einrichtung nach Anspruch 1, dadurch gekennzeichnet, daß die Verzögerungselemente und die aus elektromechanischen Wandler bestehenden Wandler Als Oberflächen- oder "Bulk"-Wellen-Verzögerungsleitungen auf Quarz- bzw. Lithiumtitanatsubstraten ausgeführt sind und daß die Dämpfungselemente gegebenenfalls zusätzlich auf diesen Substraten aufgebracht sind.

3. Einrichtung nach Anspruch 1, dadurch gekennzeichnet, daß die Verzögerungselemente der Kennungsanordnung aus parallelgeschalteten Lichtleitfasern und die Sende-/Empfangsantenne aus entsprechenden Optiken bestehen.

4. Einrichtung nach Anspruch 1, dadurch gekennzeichnet, daß die Verzögerungselemente aus verteilten Leitungen bestehen.

5. Einrichtung nach Anspruch 1, dadurch gekennzeichnet, daß die Verzögerungselemente aus Leitungsnachbildungen mit konzentrierten Elementen bestehen.

6. Einrichtung nach Anspruch 1, dadurch gekennzeichnet, daß die Verzögerungselemente aus Elementen auf Keramik- oder Metallbasis bestehen.

7. Einrichtung nach Anspruch 1, dadurch gekennzeichnet, daß die Verzögerungselemente aus Elementen auf CCD-Basis (charge coupled devices) bestehen.

8. Einrichtung nach Anspruch 1, dadurch gekennzeichnet, daß die Verzögerungselemente auf magnetischer Basis aufgebaut sind.

9. Einrichtung nach einem der Ansprüche 1 bis 8, dadurch gekennziechnet, daß den in Reihe geschalteten Verzögerungselementen, Wandlern und Dämpfungselementen aktive Verstärker voroder nachgeschaltet sind oder zumindest einzelne der parallelgeschalteten Zweige Verstärker enthalten.

10. Einrichtung nach einem der Ansprüche 1 bis 9, dadurch gekennzeichnet, daß die Verzögerungselemente und Wandler für definierte Pulscompression bzw. Pulsaufweitung (Chirp-Verfahren) ausgelegt und gestaltet sind.

11. Einrichtung nach einem der Ansprüche 1 bis 10, dadurch gekennzeichnet, daß die Programmierung und Herstellung der Kennungsanordnung mit Hilfe der rechnergesteuerten Elektronenstrahlbelichtung erfolgt.

12. Einrichtung nach einem der Ansprüche 1

·bis 11, dadurch gekennzeichnet, daß Schalter in den einzelnen parallelgeschalteten Verzögerungszweigen angeordnet sind.

13. Einrichtung nach einem der Ansprüche 1 bis 12, dadurch gekennzeichnet, daß einer oder einzelne der Verzögerungszweige in ihrer Verzögerungszeit so genau definiert und so konstant ausgelegt ist (sind), daß eine Entfernungsmessung und Ortung über diesen Zweig erfolgen kann.

14. Einrichtung nach einem der Ansprüche 1 bis 13, dadurch gekennzeichnet, daß alle Verzögerungsleitungen mit Wandlem gleicher Durchlaß frequenz in einer Verzögerungsleitung so zusammengefaßt sind, daß die Oberflächenwelle von einem durch die Empfangsantenne gespeisten Wandler erzeugt wird, auf deren Weg nacheinander so viele elektrisch parallelgeschaltete Wandler angeordnet sind, wie verschiedene Laufzeiten erforderlich sind.

15. Einrichtung nach einem der Ansprüche 1 bis 14, dadurch gekennzeichnet, daß die Antennen und Anpassungselemente auf einem in einem hermetisch dichten Gehäuse angeordneten Substrat aufgebracht sind.

16. Einrichtung nach einem der Ansprüche 1 bis 15, dadurch gekennzeichnet, daß der Kennungsanordnung ein Empfangsmischer vorgeschaltet und ein das mit der Kennung versehene Signal auf die exakt gleiche Frequenz des ursprünglich empfangenen Signals rückumsetzender Signalumsetzer und Sendeverstärker nachgeschaltet sind.

17. Einrichtung nach Anspruch 16, dadurch gekennzeichnet, daß Empfangsmischer und Sendeumsetzer an eine gemeinsame Trägerversorgung angeschaltet sind.

18. Einrichtung nach einem der vorhergehenden Ansprüche, dadurch gekennzeichnet, daß die Verzögerungsleitungen der einzelnen Leitungszweige ausgangsseitig mit hohem Reflexionsfaktor abgeschlossen sind.

19. Einrichtung nach einem der vorhergehenden Ansprüche, dadurch gekennzeichnet daß den einzelnen Zweigen aus Dämpfungselementen, Wandlern und Verzögerungselementen Durchlaß- oder Sperrfilter in Reihe geschaltet sind.

**Claims**

1. Device for identifying objects and persons comprising an information carrier (identification arrangement) arranged on the object which is to be identified and a read-out unit which is connected to said carrier/arrangement via electromagnetic waves, wherein the identification arrangement comprises a plurality of passive elements which are connected in parallel at least at the input end and which contain delay elements exhibiting different determinate delay times and which are connected via matching four-terminal networks and connection lines to a transmitting/receiving antenna or to separate transmitting and receiving antennae, characterised in that the delay elements (V) are connected in series with attenuation elements ($\pi$), which are designed to be adjustable and which exhibit a determinate attenuation, and with transmitting or blocking filters (F), and that by means of an appropriate design of the conductor paths it is possible to cut off individual delay arms, and that delay lines (V), possibly transducers (W) connected in series therewith, attenuating elements ($\pi$), filters (F) and matching four-terminal networks (SP) are arranged on one side and the antennae (AE, AS) on the opposite side of a common carrier substrate (Q), and the elements (V, W, $\pi$, F, SP, AE, AS) on the front and rear sides of the carrier substrate (Q) are connected to one another by through-contacts (X).

2. Device as claimed in Claim 1, characterised in that the delay elements and the transducers which consist of electromagnetic transducers are designed as surface- or bulkwave delay lines arranged on quartz or lithium titanate substrates and that the attenuating elements may be additionally arranged on said substrates.

3. Device as claimed in Claim 1, characterised in that the delay elements of the identification arrangement comprise parallel connected light conducting fibres and the transmitting/receiving antenna consists of corresponding optics.

4. Device as claimed in Claim 1, characterised in that the delay elements comprise distributed lines.

5. Device as claimed in Claim 1, characterised in that the delay elements comprise dummy lines with lumped components.

6. Device as claimed in Claim 1, characterised in that the delay elements comprise elements arranged on a ceramic or metal base.

7. Device as claimed in Claim 1, characterised in that the delay elements comprise elements on a CCD base (charge coupled devices).

8. Device as claimed in Claim 1, characterised in that the delay elements are constructed on a magnetic base.

9. Device as claimed in one of the Claims 1 to 8, characterised in that the series connected delay elements, transducers and attenuating elements are preceded or foliowed by active amplifiers or at least certain of the parallel connected arms contain amplifiers.

10. Device as claimed in one of the Claims 1 to 9, characterised in that the delay elements and transducers are designed and constructed for a determinate pulse compression or pulse expansion (chirp process).

11. Device as claimed in one of the Claims 1 to 10, characterised in that the programming and production of the identification arrangement is effected with the aid of computer controlled electron beam exposure.

12. Device as claimed in one of the Claims 1 to 11, characterised in that switches are arranged in the individual, parallel connected delay arms.

13. Device as claimed in one of the Claims 1 to 12, characterised in that the delay time of one or certain of the delay arms is contrived to be sufficiently accurate and sufficiently constant that range measurement and location can be effected via this arm.

14. Device as claimed in one of the Claims 1 to 13, characterised in that all the delay lines which possess transducers having the same transmission frequency are combined in a delay line in such a manner that the surface wave is produced by a transducer which is fed by the receiving antenna and in the path of which as many electrically parallel connected transducers are arranged consecutively as different transit times are required.

15. Device as claimed in one of the Claims 1 to 14, characterised in that the antennae and matching elements are arranged on a substrate which is contained in a hermetically sealed housing.

16. Device as claimed in one of the Claims 1 to 15, characterised in that the identification arrangement is preceded by a receiving mixer and is followed by a signal converter and signal amplifier which reconverts the signal provided with the identification to exactly the same frequency of the originally received signal.

17. Device as claimed in Claim 16, characterised in that the receiving mixer and transmitting converter are connected to a common carrier supply.

18. Device as claimed in one of the preceding Claims, characterised in that the delay lines of the individual line arms are terminated at the output end with a high reflection factor.

19. Device as claimed in one of the preceding Claims, characterised in that the individual arms which comprise attenuating elements, transducers and delay elements are connected in series with transmitting or blocking filters.

**Revendications**

1. Installation pour identifier des objets et des personnes, du type constituée par un support d'informations (dispositif d'identification) porté par l'objet à identifier et par une unité de lecture qui lui est reliée par des ondes électromagnétiques et dans laquelle le dispositif d'identification est constitué par plusieurs éléments passifs, montés en parallèle au moins du côté entrée et comportant des éléments à retard à durées de retard différentes et déterminées, lesdits éléments passifs étant reliés, par l'intermédiaire de quadripôles d'adaptation et de lignes de liaison, à une antenne d'émission/réception ou à une antenne d'émission et de réception distinctes, caractérisée par le fait qu'en série avec les éléments à retard (V) sont reliés des éléments d'atténuation (π) réglables et possédant une atténuation déterminée ainsi que des filtres à bande passante ou des filtres d'arrêt (F) que par une réalisation correspondante des voies conductrices certaines branches à retard (V) sont séparables et que des lignes à retard (V) et éventuellement des transducteurs (W), des éléments d'atténuation (π), des filtres (F) et des quadripoles d'adaptation (SP), montés en série avec les lignes à retard (V), sont prévus sur un côté d'un substrat commun (Q) alors que les antennes (AE, AS) sont prévues sur l'autre côté de ce substrat et que les éléments (V, W, π, F, SP, AE, AS) prévus sur le côté antérieur et le côté postérieur du substrat de support (Q) sont reliés entre eux par des liaisons (X).

2. Installation selon la revendication 1, caractérisée par le fait que les éléments à retard et les transducteurs constitués sous la forme de transducteurs électromécaniques sont réalisés sous la forme de lignes à retard à ondes de surface ou à ondes de masse sur des substrats en quartz ou en titanate de lithium et que les éléments d'amortissement sont éventuellemet prévus en plus sur ces substrats.

3. Installation selon la revendication 1, caractérisée par le fait que les éléments à retard du dispositif d'identification sont constitués par des fibres optiques montées en parallèle et que l'antenne émission/réception est constituée par des dispositifs optiques correspondants.

4. Installation selon la revendication 1, caractérisée par le fait que les éléments à retard sont constitués par des lignes réparties.

5. Installation selon la revendication 1, caractérisée par le fait que les éléments à retard sont constitués par des lignes simulées à éléments concentriques.

6. Installation selon la revendication 1, caractérisée par le fait que les éléments à retard sont constitués par des éléments à base de céramique ou d'un métal.

7. Installation selon la revendication 1, caractérisée par le fait que les éléments à retard sont constitués par des éléments sur la base de dispositifs à couplage de charge (charge coupled devices).

8. Installation selon la revendication 1, caractérisée par le fait que les éléments à retard sont constitués sur une base magnétique.

9. Installation selon l'une des revendications 1 à 8, caractérisée par le fait qu'en amount ou en aval des éléments à retard montés en série, sont prévus des transducteurs, des éléments d'amortissement et des amplificateurs actifs, ou des amplificateurs sont montées dans au moins certaines des branches montés en parallèle.

10. Installation selon l'une des revendications 1 à 9, caractérisée par le fait que les éléments à retard et les transducteurs sont conçus et conformés pour des compressions ou des expansions déterminés des impulsions (procédé Chirp).

11. Installation selon l'une des revendications 1 à 10, caractérisée par le fait que la programmation et la fabrication du dispositif d'identification sont opérées à l'aide d'irradiation à rayons d'électrons, à commande par ordinateur.

12. Installation selon l'une des revendications 1 à 11, caractérisée par le fait que des commutateurs sont disposés dans les différentes branches à retard montées en parallèle.

13. Installation selon l'une des revendications 1 à 12, caractérisée par le fait que l'une ou différentes branches à retard sont conçues, avec une définition précise et constante de leur durée de retard que la branche en question permet de réaliser une télémesure ou une localisation.

14. Installation selon l'une des revendications 1 à 13, caractérisée par le fait que toutes les lignes à retard sont rassemblées avec les transducteurs de même fréquence de transmission en une ligne à retard de manière que l'onde de surface soit produite par un transducteur alimenté par l'antenne de réception, transducteur sur la voie duquel sont prévus successivement un nombre de transducteurs montés électriquement en parallèle, qui est égal aux différentes durées de retard qui sont nécessaires.

15. Installation selon l'une des revendications 1 à 14, caractérisée par le fait que les antennes et des éléments d'adaptation sont prévus sur un substrat qui est disposé dans un boîtier hermétiquement étanche.

16. Installation selon l'une des revendications 1 à 15, caractérisée par le fait que le dispositif d'identification comporte, en amont, un mélangeur de réception, alors qu'en aval sont prévus un convertisseur de signaux ramenant le signal pourvu de la caractérisation à exactement la même fréquence que celle du signal initialement reçu, ainsi qu'un amplificateur d'émission.

17. Installation selon la revendication 16, caractérisé par le fait que le mélangeur de réception et le convertisseur d'émission sont reliés à une source commune de porteuse.

18. Installation selon l'une des revendications précédentes, caractérisée par le fait que les lignes à retard des différentes branches de lignes sont fermées, du côté sortie, avec un facteur de réflexion élevé.

19. Installation selon l'une des revendications précédentes, caractérisée par le fait qu'en série avec les différentes branches constituées par des éléments d'amortissement, des transducteurs et des éléments à retard, sont montés des filtres à bande passante ou des filtres d'arrêt.

# FIG 1

# FIG 2

1

# FIG 3

# FIG 4

# FIG 5

# FIG 6

# FIG 7

# FIG 8

# FIG 9

AE

E'

F1 — ME — VS1 — KA — VS2 — MS — F2 — SV

A'

AS

TRV

# FIG 10

AE

W1                    W2

V

W 11        W 21

W 12        W 22

W 13        W 23

AS

W 14        W 24

. . .

4